# EUROPÄISCHE PATENTANMELDUNG

(11) **EP 2 397 308 A2**
(43) Veröffentlichungstag der Anmeldung: **21.12.2011**
(21) Anmeldenummer: 11004757.8
(22) Anmeldetag: 10.06.2011
(51) Int. Cl.: B29C 51/26

(54) **Verfahren und Vorrichtung zum Recken und Formen eines Folienzuschnitts uns hiermit hergestelltes Produkt**

(30) Priorität: 15.06.2010 DE 102010023763; 11.05.2011 DE 102011101231
(71) Anmelder: KIEFEL GmbH, 83395 Freilassing (DE)
(72) Erfinder: Feil, Jürgen, 83410 Laufen (DE); Eglseer, Wolfgang, 83339 Chieming (DE); Halletz, Thomas, 83329 Waging am See (DE)
(74) Vertreter: Castell, Klaus

(57) **Zusammenfassung**

Die Erfindung betrifft ein Verfahren und eine Vorrichtung zum Recken und Formen eines Folienzuschnitts sowie ein durch dieses Verfahren hergestelltes Produkt.

## Beschreibung

Die Erfindung betrifft ein Verfahren und eine Vorrichtung zum Recken und Formen eines Folienzuschnitts sowie ein hiermit hergestelltes Produkt.

Nach dem Stand der Technik werden zum Vakuumformen von z. B. Badewannen oder Kühlschrankinnenbehältern Folienzuschnitte vor dem Verformen biaxial gereckt. Dadurch kann die Foliendicke in bestimmten Bereichen bereits vor dem Verformen dünner oder dicker gestaltet werden.

Bei der Herstellung von Fahrzeuginnenteilen, wie Instrumententafeln oder Türseitenverkleidungen, kann zudem auf den Auszugsgrad der Oberflächenstruktur eingewirkt werden.

Solche Vorrichtungen und Verfahren sind beispielsweise in der EP 1 140 470 B1, der US 3,635,640, der US 3,579,718, der JP 60049921 und der JP 63197626 bekannt.

All diesen Erfindungen gemeinsam ist es, den Folienzuschnitt vor der Verformung vorzudehnen. Nachteilig bei diesen beschriebenen Verfahren und Vorrichtungen ist die Tatsache, dass während des Formprozesses ein definiertes Nachgleiten der Folie nicht ermöglicht ist.

Ein solches Nachgleiten ist in der US 5,271,352 mittels eines zweiten Spannrahmens 59, der über Federelemente 54 gesteuert wird, verwirklicht. Gegenüber diesem Stand der Technik ist es Aufgabe der vorliegenden Erfindung, die bekannten Vorrichtungen und Verfahren zu verbessern.

Diese Aufgabe wird nach einem ersten Aspekt der Erfindung durch ein Verfahren zum Recken und Formen eines Folienzuschnitts gelöst, wobei ein Folienzuschnitt in eine Richtung gestreckt wird und während des Verformens die Folie in eine Richtung nachgleitet. Auch ein Recken des Folienzuschnitts in mehr als eine Richtung ist möglich. Ebenso kann die Folie in mehr als einer Richtung nachgleiten. Das Recken kann insbesondere durch ein Verfahren bzw. eine Vorrichtung erfolgen, wie sie in der DE 69909835 T2 beschrieben sind. Unter Recken ist dabei das Strecken bzw. Ausdehnen des Folienzuschnitts zu verstehen. Vorzugsweise erfolgt dieses so, dass die Form des Folienzuschnitts nicht verzehrt wird. Bei besonders geeigneter Ausführungsform erfolgt das Recken gleichmäßig in mehrere Richtungen. Unter Nachgleiten ist zu verstehen, dass die Folie dem durch den Formvorgang entstehenden Zug nachfolgen kann. Dadurch kann eine weitere Streckung der Folie durch den Formvorgang ganz oder teilweise vermieden werden.

Das Nachgleiten kann bei besonders geeigneter Ausführung gesteuert werden. In bestimmten Anwendungsfällen reicht es jedoch bereits aus, wenn das Nachgleiten der Folie nicht gesteuert wird, sondern selbstständig über den Zug der Folie beim Verformen entsteht.

Vorteilhafterweise kann auch die Spannkraft geregelt werden. Unter der Spannkraft ist die Kraft zu verstehen, mit der der Folienzuschnitt gereckt wird. Diese kann durch eine Regelung an den verwendeten Folienzuschnitt bzw. an die gewünschten Prozessparameter angepasst werden.

Auch die Spanngeschwindigkeit kann geregelt werden. Unter der Spanngeschwindigkeit ist die Geschwindigkeit zu verstehen, mit der der Folienzuschnitt gestreckt wird. Auch hier ermöglicht eine Regelung eine Anpassung an den verwendeten Folienzuschnitt sowie eine Regelung der Prozessparameter und damit eine Beeinflussung des Endprodukts.

Vorteilhaft ist weiter, wenn während des Verformens und/oder in einem nachgelagerten Schritt eine Formhilfe eingesetzt wird. Während das Verformen durch ein Formwerkzeug von innen erfolgt, auf das die Folie aufgezogen wird, können Formhilfen von außen wirken, um den Formvorgang zu unterstützen. Dadurch kann die Folie in Bereichen, in denen es beim auf das Formwerkzeug aufziehen zu keinem Aufliegen der Folie auf dem Formwerkzeug kommt, an dieses herangedrückt werden.

Ein zweiter Aspekt der Erfindung umfasst eine Vorrichtung zum Recken und Formen eines Folienzuschnitts, insbesondere zum Durchführen eines erfindungsgemäßen Verfahrens mit einem Spannrahmen und einem Halteelement, wobei das Halteelement in der Folienebene gleitend gelagert ist, so dass es beim Formen nachgleitet.

In einer bevorzugten Ausführungsform ist der Spannrahmen mit mindestens einem Längs- und mindestens einem Querbalken ausgebildet. Der Spannrahmen kann insbesondere wie in der DE 69909835 T2 beschrieben ausgebildet sein. Unter der Folienebene ist die Ebene zu verstehen, in der die Folie durch den Spannrahmen gehalten ist. Durch eine solche Vorrichtung wird einerseits die Wärmeausdehnung der Folie kompensiert, andererseits kann die Folie in mindestens einer Achse gereckt werden und die Folie kann während des Formvorganges nachgleiten.

Von Vorteil ist, wenn der Spannrahmen in x- und/oder y- und/oder z-Richtung verfahrbar ist. So kann der Spannrahmen in alle Raumrichtungen beispielsweise relativ zum Formwerkzeug völlig frei bewegt werden.

Weiter von Vorteil ist, wenn der Spannrahmen um einen Schwerpunkt aus der Folientransportebene schwenkbar angeordnet ist. Unter der Folientransportebene ist die Ebene zu verstehen, in welcher die Folie in den Spannrahmen transportiert wird. Dadurch kann der Winkel zwischen Formwerkzeug und Spannrahmen verändert werden. Dies ermöglicht ein besseres konturabhängiges Nachgleiten der Folie an der zu formenden Oberfläche. Dies ist insbesondere bei komplexen Formteilen von Vorteil.

Vorteilhafterweise ist der Spannrahmen um einen Fixpunkt drehbar gelagert. Dabei ist sowohl eine Drehung in als auch eine Drehung gegen den Uhrzeigersinn um beliebige Winkel möglich. Dadurch kann der Folienzuschnitt optimal auf die zu formende Kontur ausgerichtet werden. Diese Drehbewegung kann während des Formvorgangs gesteuert erfolgen.

Nach einer weiteren Ausgestaltung der Erfindung weist der Spannrahmen eine Klemmvorrichtung auf, die in x- und/oder y- und/oder z-Richtung bewegbar ist. Diese kann insbesondere auf den Spannrahmen angeordnet sein.

Die Klemmvorrichtung kann bevorzugt um einen Fixpunkt drehbar gelagert sein. So kann sie sowohl durch Verschieben als auch durch Drehen in Kontakt mit dem Folienzuschnitt gebracht werden.

Weiter von Vorteil ist schließlich, wenn die Vorrichtung eine Formhilfe aufweist. Unter einer Formhilfe ist dabei jede Vorrichtung zu verstehen, die hilft, den Folienzuschnitt besser auf die Konturen des Formwerkzeugs aufzulegen.

Ein letzter Aspekt der Erfindung umfasst ein mit einem erfindunggemäßen Verfahren und/oder einer erfindungsgemäßen Vorrichtung hergestelltes Produkt.

Die Erfindung wird nachfolgend anhand von Ausführungsbeispielen unter Bezugnahme auf die Zeichnungen näher erläutert.

Hierin zeigen
- Fig. 1: eine erfindungsgemäße Vorrichtung vor dem Formen,
- Fig. 2: eine erfindungsgemäße Vorrichtung während bzw. nach dem Formen,
- Fig. 3: eine erfindungsgemäße Vorrichtung mit einem verstellbaren Spannrahmen,
- Fig. 4: eine erfindungsgemäße Vorrichtung mit einem Spannrahmen mit Spannelementen,
- Fig. 5: eine erfindungsgemäße Vorrichtung mit einem in Folienebene verstellbaren Spannrahmen,
- Fig. 6: eine erfindungsgemäße Vorrichtung mit einer zusätzlichen Formhilfe,
- Fig. 7: einen Spannrahmen und
- Fig. 8: einen Spannrahmen mit aufgesetzten Spannelementen.

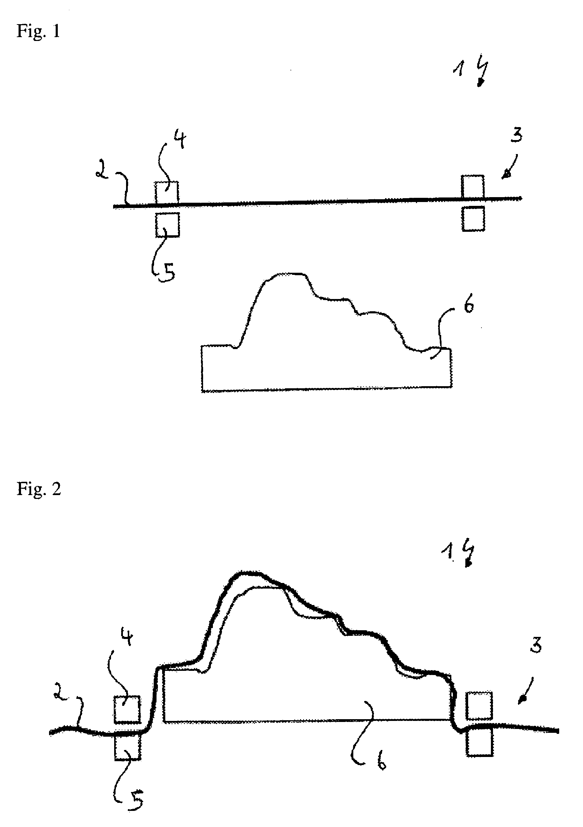

Figur 1 zeigt eine erfindungsgemäße Vorrichtung 1 zum Recken und Formen eines Folienzuschnitts 2 bevor der zweite Schritt des erfindungsgemäßen Verfahrens, das heißt das Formen durchgeführt wird. Die Folie 2 ist im Spannrahmen 3 eingespannt. Dieser besteht aus einem Oberspannrahmen 4 und einem Unterspannrahmen 5. Das Formwerkzeug 6 befindet sich noch nicht in Kontakt mit der Folie 2.

In einem nächsten Schritt wird wie in Figur 2 abgebildet das Formwerkzeug 6 in die vom Spannrahmen 3 gehaltene Folie 2 bewegt. Dadurch passt sich die Folie den Konturen des Formwerkzeugs an. Erfindungsgemäß besteht hierbei die Möglichkeit, dass die Folie in mindestens einer Richtung nachgleitet. Wenn ein Nachgleiten nicht möglich ist, wird die Folie durch das Formen weiter gedehnt. Dieser Effekt wird durch ein teilweises oder vollständiges Nachgleiten der Folie verringert oder vollständig vermieden.

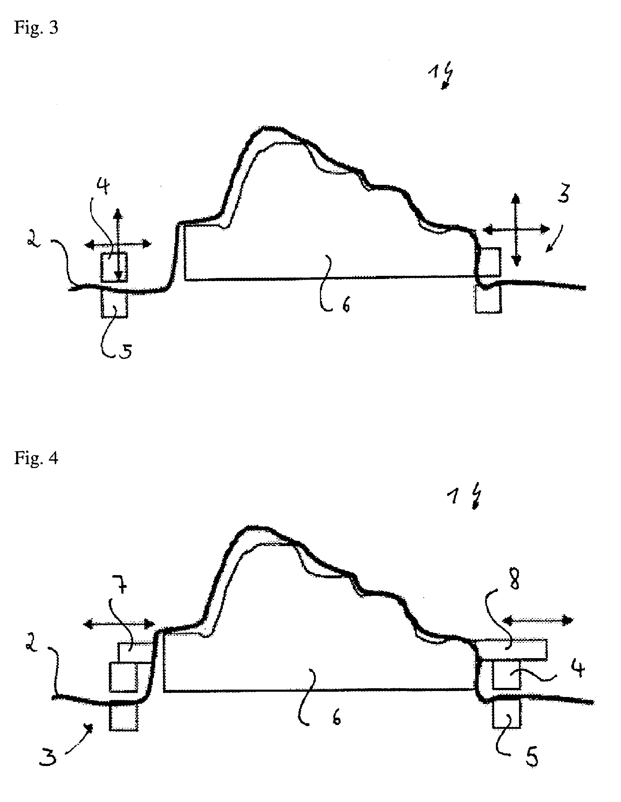

Wie in Figur 3 dargestellt, kann der Spannrahmen 3 in x-, y- und z-Richtung verstellbar sein. Hier wurde der Spannrahmen auf der einen Seite näher auf das Formwerkzeug bewegt, während sich der Abstand auf der anderen Seite des Formwerkzeugs dadurch vergrößert hat.

Zusätzlich kann der Spannrahmen 3 wie in Figur 4 abgebildet Spannelemente 7, 8 aufweisen. Diese sind am Oberspannrahmen 4 befestigt und Halten die Folie 2 zusätzlich.

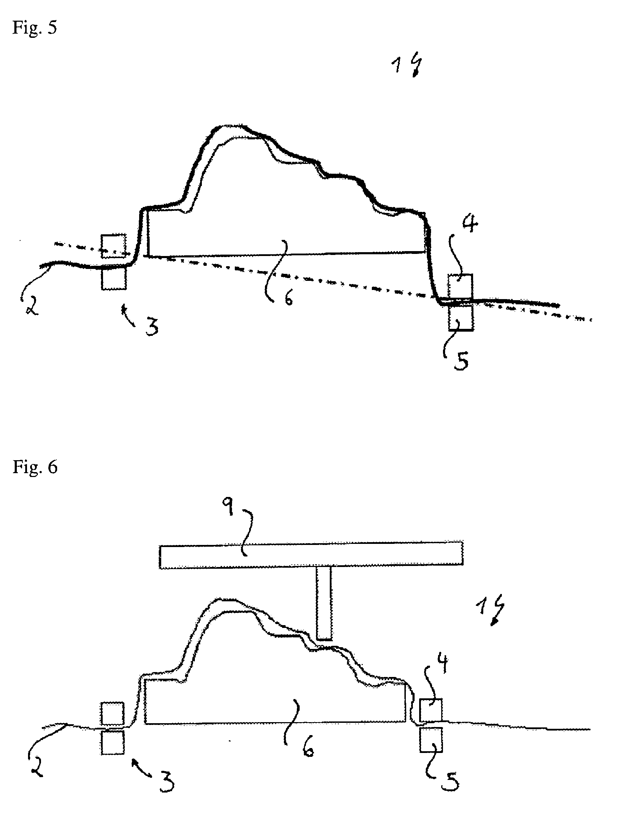

Schließlich kann der Spannrahmen wie in Figur 5 dargestellt in der Folienebene verschoben werden. Hier liegt der Spannrahmen 3 auf der einen Seite des Formwerkezeugs deutlich tiefer als auf der anderen Seite.

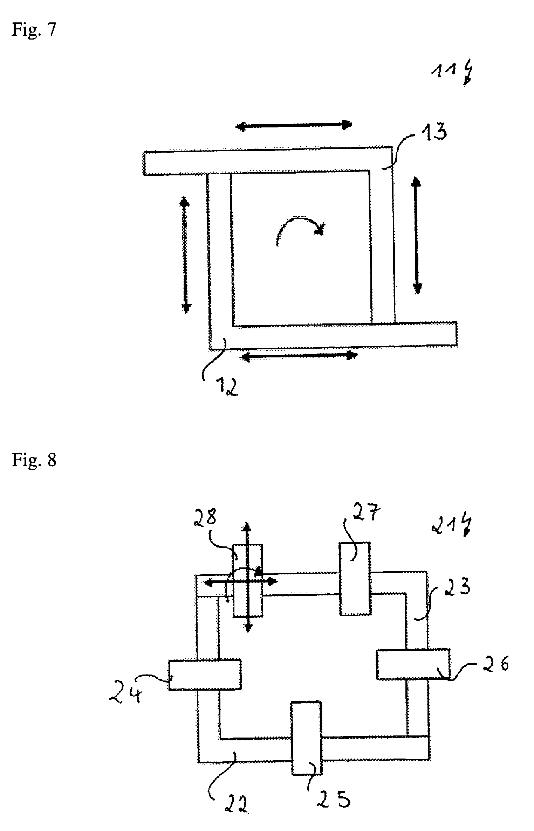

Um eine bessere Anpassung des Folienzuschnitts 2 an die Kontur des Formwerkzeugs 6 zu ermöglichen, kann wie in Figur 8 dargestellt zusätzlich eine Formhilfe 9 Anwendung finden.

Figur 7 zeigt einen Spannrahmen 11 in Draufsicht. Dieser besteht aus zwei L-förmigen Rahmenteilen 12, 13, die jeweils auf einem Längs- und einem Querbalken zusammengesetzt sind. Diese können gegeneinander verschoben werden, wodurch sich die Fläche zwischen den Spannrahmenteilen 12, 14 vergrößert. Zusätzlich ist der Spannrahmen drehbar.

In Figur 8 ist ein Spannrahmen 21 in Draufsicht abgebildet. Die Spannrahmenteile 22 und 23 sind vollständig ausgezogen, wodurch die Folie maximal gereckt wird. Auf diesen Spannrahmen sind Spannelemente 24, 25, 26, 27 und 28 aufgesetzt. Diese sind sowohl verstellbar als auch drehbar angeordnet und können so in Kontakt mit einer in den Spannrahmen eingespannten Folie während des Formens gebracht werden.

## Patentansprüche

1. Verfahren zum Recken und Formen eines Folienzuschnitts, ***dadurch gekennzeichnet, dass*** ein Folienzuschnitt in mindestens eine Richtung gestreckt wird und während des Verformens die Folie in mindestens eine Richtung nachgleitet.

2. Verfahren nach Anspruch 1, ***dadurch gekennzeichnet, dass*** das Nachgleiten gesteuert wird.

3. Verfahren nach Anspruch 1 oder 2, ***dadurch gekennzeichnet, dass*** die Spannkraft geregelt wird.

4. Verfahren nach einem der vorhergehenden Ansprüche, ***dadurch gekennzeichnet, dass*** die Spanngeschwindigkeit geregelt wird.

5. Verfahren nach einem der vorhergehenden Ansprüche, ***dadurch gekennzeichnet, dass*** während des Verformens und/oder in einem nachgelagerten Schritt eine Formhilfe eingesetzt wird.

6. Vorrichtung zum Recken und Formen eines Folienzuschnitts, insbesondere zum Durchführen eines Verfahrens nach einem der Ansprüche 1 bis 5, mit einem Spannrahmen und einem Halteelement, ***dadurch gekennzeichnet, dass*** das Halteelement in der Folienebene gleitend gelagert ist, so dass es beim Formen nachgleitet.

7. Vorrichtung nach Anspruch 6, ***dadurch gekennzeichnet, dass*** der Spannrahmen in x- und/oder y- und/oder z-Richtung verfahrbar ist.

8. Vorrichtung nach Anspruch 6 oder 7, ***dadurch gekennzeichnet, dass*** der Spannrahmen um einen Schwenkpunkt aus der Folientransportebene schwenkbar angeordnet ist.

9. Vorrichtung nach einem der Ansprüche 6 bis 8, ***dadurch gekennzeichnet, dass*** der Spannrahmen um einen Fixpunkt drehbar gelagert ist.

10. Vorrichtung nach einem der Ansprüche 6 bis 9, ***dadurch gekennzeichnet, dass*** der Spannrahmen eine Klemmvorrichtung aufweist.

11. Vorrichtung nach einem der Ansprüche 6 bis 10, ***dadurch gekennzeichnet, dass*** die Klemmvorrichtung in x- und/oder y- und/oder z-Richtung bewegbar ist.

12. Vorrichtung nach einem der Ansprüche 6 bis 11, ***dadurch gekennzeichnet, dass*** die Klemmvorrichtung um einen Fixpunkt drehbar gelagert ist.

13. Vorrichtung nach einem der Ansprüche 6 bis 11, ***dadurch gekennzeichnet, dass*** die Vorrichtung eine Formhilfe aufweist.

14. Mit einem Verfahren nach einem der Ansprüche 1 bis 5 und/oder einer Vorrichtung nach einem der Ansprüche 6 bis 12 hergestelltes Produkt.
